**Europäisches Patentamt**

**European Patent Office**

**Office européen des brevets**

(19)

(11) Veröffentlichungsnummer: **0 034 566**

**A1**

(12) # EUROPÄISCHE PATENTANMELDUNG

(21) Anmeldenummer: **81810028.1**

(22) Anmeldetag: **02.02.81**

(51) Int. Cl.³: **B 29 D 27/02**
**C 08 J 9/00, C 08 L 61/00**

(30) Priorität: **08.02.80 US 119870**

(43) Veröffentlichungstag der Anmeldung:
**26.08.81 Patentblatt 81/34**

(84) Benannte Vertragsstaaten:
**AT BE DE GB IT NL**

(71) Anmelder: **CIBA-GEIGY AG**
**Patentabteilung Postfach**
**CH-4002 Basel(CH)**

(72) Erfinder: **Elmore, Charles E.**
**5331 Urban Crest**
**Dallas Texas 75227(US)**

(72) Erfinder: **Harmon, David H.**
**9458 Cove Meadow**
**Dallas Texas 75238(US)**

(54) Verfahren und Anlage zur Herstellung von Formkörpern aus vollständig gehärtetem Harnstoff-Formaldehydharz-Schaumstoff.

(57) Ein Verfahren und eine Anlage zur Herstellung von Formkörpern aus Harnstoff-Formaldehydharz ausgehend von Harnstoff-Formaldehydharzschaum liefert Endprodukte, die zur Verwendung als Isoliermaterial geeignet sind. Fließfähiger Harnstoff-Formaldehydharzschaum (A) wird zu diskreten Teilchen (A') in einer Teilchenerzeugervorrichtung (10') geformt, in welchem die Teilchen auch teilweise gehärtet werden. Nach der vollständigen Aushärtung der Teilchen (A') werden sie mit fließfähigem Harnstoff-Formaldehydharzschaum in einer Mischvorrichtung (11) mit Mischkopt (66) vermengt, um eine Mischung (C) zu erzeugen, die eine kohärente Masse darstellt. Die Mischung (C) wird nun in einer Formgebungsvorrichtung (12) zu einem Strang geformt, der die gewünschte Querschnittsfläche und -kontur aufweist. Der so geformte Strang der Mischung (C) wird nun mittels eines Schneidgeräts (132) in Formstücke gewünschter Länge zerschnitten. Hierauf werden die Formstücke in einem Ofen (146) vollständig ausgehärtet und dann in ein geeignetes Verpackungsmaterial eingehüllt.

./...

_Fig. 1_

LAGER
ODER
VERSAND

Case 37-12714

Verfahren und Anlage zur Herstellung

von Formkörpern aus vollständig gehärtetem

Harnstoff-Formaldehydharz-Schaumstoff.

Die Erfindung betrifft ein Verfahren zur Herstellung von geformten Körpern, insbesondere wärmeisolierende Platten, aus vollständig gehärtetem Harnstoff-Formaldehydharz-Schaumstoff, welcher einen die mechanische Beständigkeit des Körpers erhöhenden Anteil an Füllstoffteilchen enthält, wobei die Teilchen mit einem aus einer ungehärteten Harnstoff-Formaldehydharzlösung erzeugtem fließfähigen Schaum gemischt werden können, sowie nach diesem Verfahren hergestellte Formkörper.

Auch betrifft die Erfindung eine Anlage zur Durchführung des neuen Verfahrens, sowie in dieser Anlage eine neuartige Erzeugereinrichtung zur Erzeugung von formbeständigen, im wesentlichen stäbchenförmigen Schaumstoffteilchen und eine neuartige Mischvorrichtung.

Es ist wohlbekannt, daß leichte Formkörper die aus ausgehärteten Harnstoff-Formaldehydharzen bestehen, aus ungehärtetem, fließfähigem vorkondensiertem Harnstoff-Formaldehydharz-Schaum oder aus anderen ungehärteten, vorpolymerisierten Harzlösungen unter Verwendung eines Härtungsmittels oder -katalysators zusammen mit Schaum-

2

bildungs- und/oder Netzmitteln durch Gelbildung und Härtung der Harzlösung hergestellt werden können. Zur Schaumbildung kann die Harzlösung mechanisch geschlagen werden, um in sie feinverteilte Luftbläschen einzubringen, welche durch den Schaumbildner stabilisiert werden, worauf der Schaum in einer Form oder einem Hohlraum eine gewünschte Form erhält und ausgehärtet wird. Solche Schaumstoff-Formkörper besitzen meist nur geringe mechanische Festigkeit und erleiden gewöhnlich beim Aushärten erhebliche Schrumpfung und Deformation, wie insbesondere Verwerfung und Rißbildung, infolge des Verlusts erheblicher Mengen von in der Mischung vorhandenem Wasser, die bei der Härtung freigesetzt werden und verdunsten.

Es ist weiter bekannt, Harnstoff-Formaldehydharz-Formkörper als Wärmeisolierung, z.B. in Gebäudewänden zu verwenden, wobei ungehärteter, fließfähiger Harnstoff-Formaldehydharz-Schaum (also vorzugsweise in flüssiger die Luftbläschen umhüllender Phase) in Hohlräume in Gebäudewänden eingeblasen wird, in denen er dank der Anwesenheit eines Härtungskatalysators nachträglich aushärtet. Auch hierbei ist eine Rißbildung oder insbesondere ein Schrumpfen des eingeblasenen, der Form des Hohlraumes möglichst perfekt angepaßten Schaumkörpers unerwünscht, da die Bildung von lufterfüllten Räumen beim Schrumpfen die Wärmeisolierung verschlechtert. Weiter ist bei dieser Anwendung ein Überschuß von Harnstoff bei der Vorkondensierung erforderlich, um zu vermeiden, daß freier Formaldehyd im Schaum okkludiert und mit der Zeit nach außen diffundiert, wobei insbesondere im Gebäudeinneren die Anwesenheit von Formaldehyd in der Luft zu Gesundheitsschäden führen kann, auch wenn die Konzentration desselben zu niedrig ist, um Geruchsprobleme zu verursachen.

Dabei erfordert die völlige Aushärtung des Schaumstoffs je nach Außentemperatur oft mehrere Tage oder sogar Wochen. Wie gesagt, leiden auch insbesondere die an sich ausgezeichnete Wärmeisolierung und eventuell auch die Schallisolierung des ausgehärteten Harnstoff-Formaldehydharz-Schaumstoffes beim Schrumpfen, Verwerfen oder anderer Deformation, die beim Verdunsten von im Harnstoff-Formaldehydharz enthaltenem Wasser auftritt, so daß immer noch eine erhebliche Menge Luft durch die mit Isolierungsmasse gefüllten Wände migrieren kann.

Es besteht also ein Bedürfnis nach Verfahren und Anlagen, mit denen von erheblichem Schrumpfen und anderer Deformation möglichst freie Harnstoff-Formaldehydharz-Formkörper hergestellt werden können.

Dabei wird die Herstellung von weitgehend geruchfreien Harnstoff-Formaldehydharz-Schäumen bereits z.B. in der US-PS 3 312 639 (G.H. Justice/ Allied Chemical Corp.) und der US-PS 3 855 161 (W.H. Bauer/ Filfast Corp.) beschrieben.

4

Auch ist es bereits aus der US-PS 3 957 700 (J.F. Ferriday et al/ British Industrial Plastics Ltd) und auch aus der US-PS 3 957 701 (N.A. Cutler et al/British Industrial Plastics Ltd) bekannt, aminoplastische Formmassen, die auch für den Spritzguß geeignet sind, durch Einbringen von Füllstoffteilchen in eine Harnstoff-Formaldehydharz-Lösung herzustellen, wobei vorgeschlagen wird, zur Verbilligung den bereits bekannten Füllstoff α-Cellulose teilweise oder vollständig durch gehärtete Harnstoff-Formaldehydharz-Schaumteilchen zu ersetzen, ohne daß die physikalischen Eigenschaften des erhaltenen Schaumstoff-Formkörpers hierdurch wesentlich geändert werden. Die gehärteten Schaumstoffteilchen werden durch Mahlen erhalten. Dabei soll das Gewichtsverhältnis von Harz zu Füllstoff zwischen 6:1 und 1:1 liegen. Weiter wird ein Gehalt an Schaumstoffteilchen von 30 bis 70 Gew.-% bezogen auf das Gesamtgewicht des Füllstoffs empfohlen.

Die so erhaltenen Formmassen sind jedoch nicht geschäumt und daher für Zwecke der Wärmeisolation von Gebäudewänden zu kompakt und teuer.

In der DE-AS 1 266 484 (Raichle et al/BASF) wird schließlich ein poröser Formkörper aus kombiniertem Schaumstoff beschrieben, der u.a. durch Einbringen von härtbarem, noch fließbarem Kunststoffschaum in die Zwi-

5

schenräume zwischen Teilchen aus porosem Kunststoff in einer Schneckenmaschine mit Einfüll-, Misch- und Förderteil, anschließendes Austragen und Erstarren hergestellt wird. Als fließbare Masse kann z.B. ein Harnstoff-Formaldehyd-Kondensationsprodukt verwendet werden, das in üblicher Weise aufgeschäumt wurde. Als poröse Kunststoffteilchen können u.a. auch solche aus Phenolharz oder Polystyrol verwendet werden.

Das Volumenverhältnis von Kunststoffteilchen zu Kunststoffschaum soll im Bereich von 3:7 bis 7:3 liegen. Die Fördergeschwindigkeit muß hierbei jedoch größer als ein Misch- und Einfüllteil sein. Auch soll die Schnecke bestimmte Dimensionen des Einfüll- und Mischteils aufweisen und im Förderteil eine größere Gangsteigung aufweisen als in den vorangehenden Bereichen. Hierbei werden beide Komponenten des zu erzielenden Gemischs von außen her auf die Schneckenwindungen aufgetragen, so daß eine vollständig gleichförmige Mischung nur bei langer Schnecke zu erzielen ist.

Eine wichtige Aufgabe der vorliegenden Erfindung ist daher die Verwirklichung eines Verfahrens und eine Anlage zur Herstellung von zur Wärmeisolierung von Gebäudewänden besonders geeigneten, billigeren Formmassen, die gleichwohl weitgehend frei von Schrumpfung, Rißbildung und andersartiger Verformung sind.

6

Dies wird erfindungsgemäß erreicht durch ein Verfahren und eine Anlage der Eingangs beschriebenen Art, deren Merkmale in den Ansprüchen 1 und 9 beschrieben sind, während in Anspruch 8 das nach dem erfindungsgemäßen Verfahren erhaltene Produkt und in den übrigen Ansprüchen bevorzugte Ausführungsformen der Erfindung beschrieben sind.

Beim erfindungsgemäßen Verfahren werden mindestens weitgehend oder vollständig ausgehärtete diskrete Harnstoff-Formaldehydharz-Schaumstoffteilchen aus einer geschäumten Lösung von ungehärtetem Harnstoff-Formaldehydharz, der ein Netzmittel und ein Härtungsmittel zugesetzt sind, hergestellt. Die ungehärteten Schaumteilchen werden zu formbeständigen Harnstoff-Formaldehydharz-Schaumstoffteilchen gehärtet, die weitgehend stäbchenförmig sind.

Diese Schaumstoffteilchen werden dann mit einem fließfähigen Harnstoff-Formaldehydharz-Schaum, der ungehärtetes Harnstoff-Formaldehydharz, Wasser, ein Netzmittel und ein Härtungsmittel enthält, gemischt, wodurch eine eine kohärente Masse bildende Mischung erhalten wird, die zu der gewünschten Form, vorzugsweise einer Platte ausgeformt wird. Die geformte Mischung wird dann gehärtet, um das endgültige Harnstoff-Formaldehydprodukt in gewünschter Form zu erhalten.

7

In dem erfindungsgemäßen Teilchenerzeuger ist ein senkrechter Führungskanal vorgesehen, durch den ein Einzelfadenstrom von Harnstoff-Formaldehydschaum in den Erzeuger injiziert werden kann, der von einem gleichgerichteten laminaren Luftstrom umgeben ist, der den Transport des Schaumfadens durch den Kanal unterstützt. Weitere bevorzugte Merkmale der erfindungsgemäßen Erzeugereinrichtung sind in den Ansprüchen 10 bis 14 beschrieben.

Zwischen dem oberen offenen Ende des Führungskanals und der Luftauslaßöffnung am oberen Ende des Erzeugerturms vorgesehene Abprallflächen verhindern den direkten Austritt von aus dem entlang der mittigen Längsachse des Turms angeordneten Kanal entweichender Luft aus dem Turm und lenken den aus dem Kanal austretenden Schaumstrom radial zur Turmlängsachse nach außen um, wobei der auf dem Weg durch den Kanal im Kontakt mit der vorzugsweise etwas erhitzten Luft bereits etwas vorgehärtete Schaumfaden in meist stabförmige Stückchen zerbrochen wird.

Während die Schaumfadenstückchen im Außenraum des Turmes zu Boden fallen, werden die Teilchen teilgehärtet und bilden eine äußere Oberfläche oder Haut, die bereits genügend gehärtet ist, so daß die Teilchen bei ihrer Ablagerung auf dem Boden des Turmes formbeständig und von einander getrennt bleiben und nicht wieder zusammenkleben. Um eine genügende Vorhärtung der Teilchen sicherzustellen und hierzu die Verweilzeit der Teilchen in der

8

Schwebe im Turmaußenraum zu erhöhen, wird durch Löcher in der Bodenwandung des Turms ein aufwärtsgerichteter Luftstrom in den Außenraum eingeblasen. Diese Luft kann dem oberen Ende des Turmes entnommen und im Kreislauf wieder durch die Bodenwandung in den Turm eingeführt werden.

Die im Bodenraum des Erzeugers angesammelten Schaumstoffteilchen können direkt verwendet oder, insbesondere, wenn sie nicht vollständig ausgehärtet sind, vorzugsweise erst in einen Vorratsbehälter überführt werden, in dem die Aushärtung vervollständigt wird.

Die Schaumstoffteilchen können dann durch einen Einfülltrichter in die erfindungsgemäße Mischeinrichtung eingeführt werden, deren Merkmale in Anspruch 15 und weitere bevorzugte Merkmale in Ansprüchen 16-19 beschrieben sind. Das aus der Mischvorrichtung gelieferte Gemisch wird dann in einer Formvorrichtung geformt, um ihm seine endgültige Gestalt als Formkörper zu geben.

Stattdessen kann das Gemisch auch direkt in noch fließbarem Zustand in einen z.B. von Balken, Sparren oder dergleichen Rahmen eingefaßten Hohlraum einer Gebäudewand, der auf seiner Außen- und auf seiner Innenseite z.B. durch Spannwände bekleidet ist, über einen durch die Außen- oder Innenbekleidung der Wand durchgebrochenen Zugang von außen her eingespritzt werden. Der Zugang wird nach Ausfüllen des Hohlraums mit Gemisch wieder verschlossen. Hierbei sollte das Gemisch jedenfalls frei von okkludiertem Formaldehyd sein, was durch entsprechende stöchiometrisch genaue Abmessung der Monomerkomponenten des Harzes oder sogar durch einen leichten Überschuß an Harnstoff und geeignete Mengen an Härtungskatalysatoren wie z.B. Milchsäure oder Essigsäure erreicht werden kann.

Wird eine Formvorrichtung verwendet, die eine Transportstraße, z.B. mit vier getrennten Fließbändern umfaßt, welche so zu einander verlaufen, daß sie eine Fläche begrenzen, deren Breite und Dicke den gewünschten Dimensionen des fertigen vollständig gehärteten Harnstoff-Formaldehydharz-Schaumstoffkörpers, z.B. einer Platte, entsprechen, so ist die Abwesenheit von okkludierten Formaldehydspuren weniger kritisch. Vorzugsweise wird eine Kompressionszone am Eingang der durch die Fließbänder begrenzten Fläche vorgesehen, in welcher Druck auf das noch nicht vollständig ausgehärtete Gemisch ausgedrückt wird und dieses in gewünschtem Maße verdichtet.

Beim Austritt aus der Formvorrichtung ist der gebildete Gemischstrang bereits formbeständig und besitzt die gewünschten Querschnittsdimensionen, im allgemeinen mit einem kleinen Übermaß zur Berücksichtigung einer geringfügigen Schrumpfung.

Der Gemischstrang wird dann einer Schneidvorrich-

10

tung zugeführt, in der er in Einzelformstücke, insbesondere Platten, der gewünschten Länge getrennt werden kann.

Die so erhaltenen Formstücke können dann noch in einem Ofen vollständig ausgehärtet und anschließend auf mindestens einer Seite mit einer wasserundurchlässigen Schicht, z.B. aus Aluminiumfolie, bedeckt (water barrier) oder auch in einem geeigneten Packmaterial völlig eingewickelt werden, wodurch die Isolierungswirkung des Endprodukts, vor allem auch gegen Feuchtigkeit, noch verbessert werden kann.

Bei der vollständigen Aushärtung im Ofen werden außer Wasser auch alle noch vorhandenen Spuren von freiem Formaldehyd aus den Formstücken entfernt.

11

Weitere Einzelheiten der Erfindung ergeben sich aus der nun folgenden Beschreibung der Zeichnungen, in welchen

Fig. 1 eine halbschematische Darstellung der erfindungsgemäßen Anlage in einer bevorzugten Ausführungsform,

Fig. 2 eine schematische Schnittdarstellung durch die erfindungsgemäße Erzeugereinrichtung zur Herstellung stäbchenförmiger Schaumstoffstückchen,

Fig. 3 eine schematische Schnittdarstellung durch eine erfindungsgemäße Mischvorrichtung,

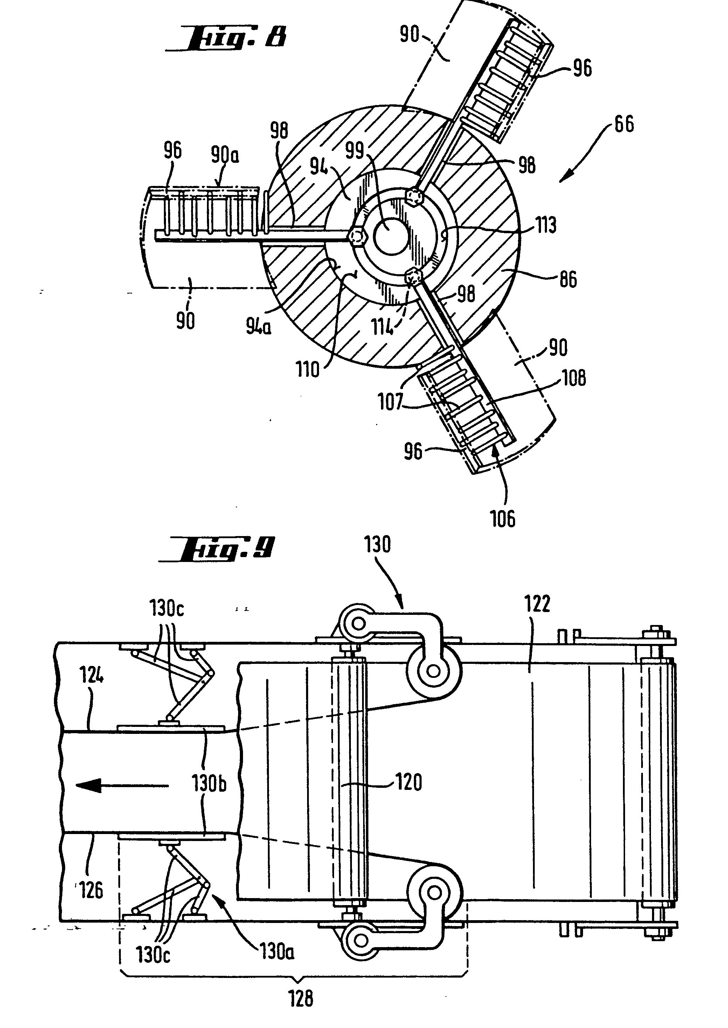

Fig. 4 eine Detailansicht im Längsschnitt durch einen Teil der Mischvorrichtung mit den zugehörigen Antriebsmitteln,

Fig. 5 eine schematische Seitenansicht einer besonderen Ausbildungsform der an die Austragseite der Mischvorrichtung angeschlossenen Formvorrichtung,

Fig. 6 einen Längsschnitt durch den Mischkopf der Mischvorrichtung nach Fig. 3,

Fig. 7 eine Draufsicht auf denselben Mischkopf von der Antriebsseite der Mischvorrichtung her gesehen,

Fig. 8 einen Querschnitt durch den in Figuren 6 und 7 gezeigten Mischkopf in der zu den Schaumausgabeflügeln des Mischkopfes mittig verlaufenden Ebene, und

Fig. 9 eine Draufsicht auf einen Teil der in Fig. 1 gezeigten Formvorrichtung darstellt.

12

Mit dem Verfahren und der Anlage gemäß der vorliegenden Erfindung können Harnstoff-Formaldehydharz-Schaumstoffkörper,vorzugsweise in Gestalt von Platten oder Blöcken hergestellt werden, die beim Härten keine merkliche Neigung zur Rißbildung oder Verwerfung oder zu andersartiger Verzerrung ihrer Gestalt zeigen. Typische Platten von z.B. etwa 8 mm Dicke zeigen relative R-Werte um 17, während eine typische Glasfaser-Isolationsplatte gleicher Dicke nur einen R-Wert von ca. 11 aufweist.

Der erfindungsgemäß verwendete Harnstoff-Formaldehydharzschaum enthält ungehärtetes Harnstoff-Formaldehydharz (Vorkondensat), Härtungsmittel und Wasser. Im allgemeinen wird zum leichteren Schäumen noch ein Netzmittel oder Schaumbildner zugesetzt. Dabei befindet sich ungehärteter Schaum in fließfähiger Form, während ausgehärteter Schaumstoff ein festes Material darstellt. Der Schaum wird durch Einarbeiten kleiner Luftbläschen in die Mischung von Harzlösung, Härtungsmittel, Wasser und meist auch Netzmittel erzeugt. Verfahren zur Erzeugung solcher Harnstoff- Formaldehydharzschäume sind wohlbekannt. So kann im vorliegenden Verfahren nach der Erfindung verwendbarer Schaum nach den Herstellungsmethoden erzeugt werden, die in den USA-Patenten 3 150 108, 3 284 379, 3 963 650, 4 069 175 und 4 129 533, in der CA-PS 1 013 499, der GB-PS 1 470 953 und auch in einem Artikel von Sarig und Little über "Mechanical Properties

13

of Urea-Formaldehyde Foam" im Journal of Applied Polymer Sciences, Vol. 22, Seiten 419-427 (1978) beschrieben sind.

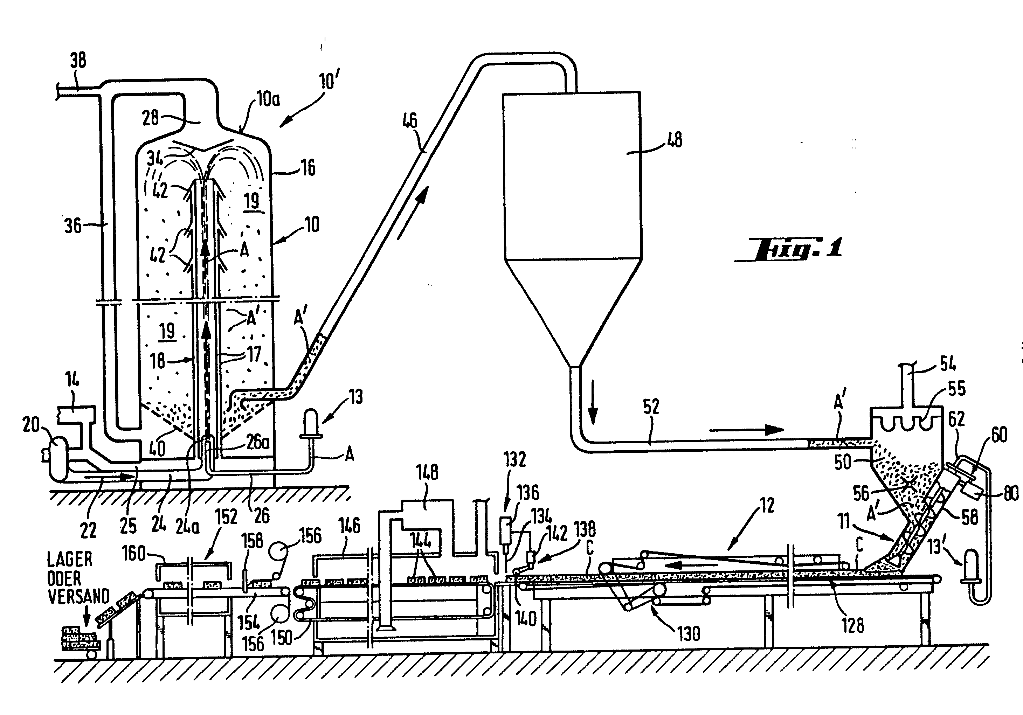

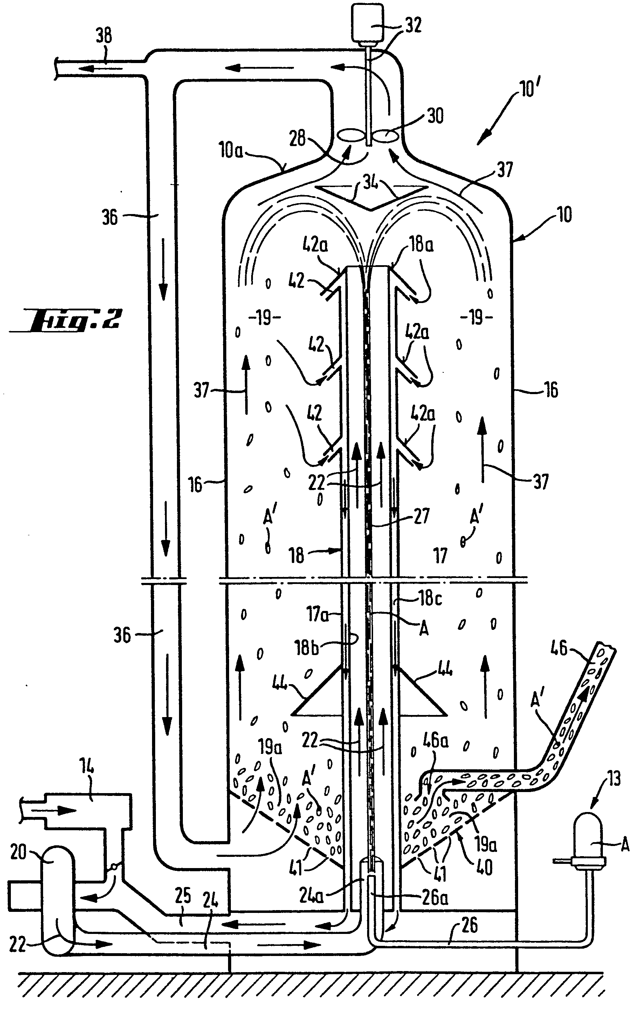

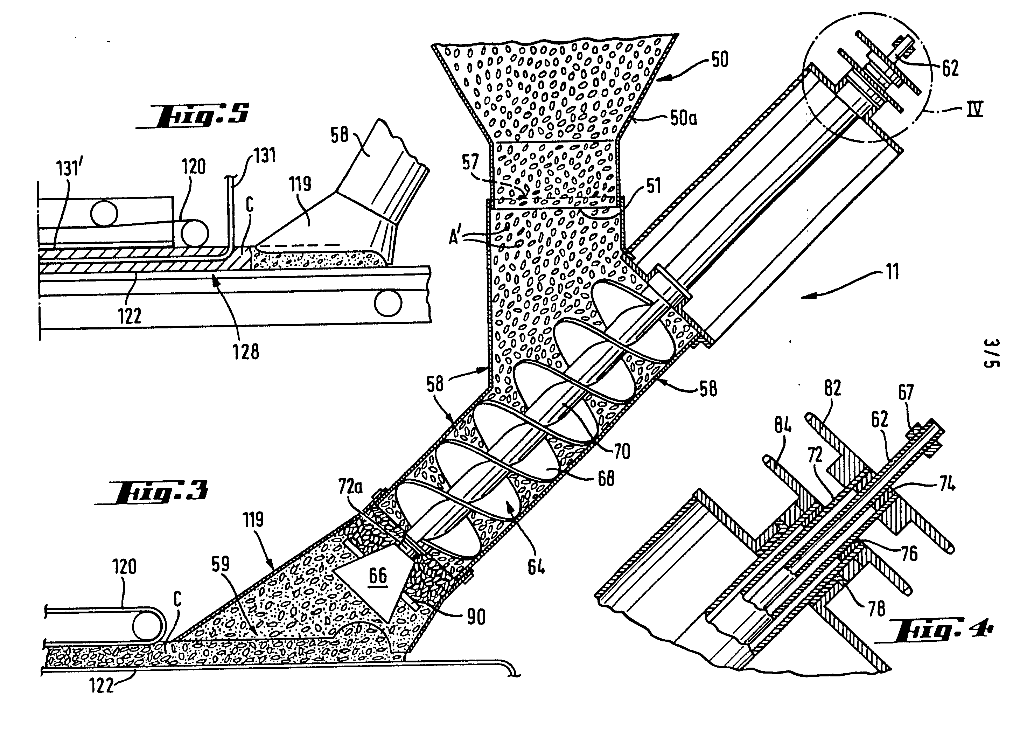

Erfindungsgemäß hergestellte Harnstoff-Formaldehydharz-Schaumstoffstückchen sind verhältnismäßig kleine Teilchen von einer durchschnittlichen Länge im Bereich von 1 bis 15 cm und einem durchschnittlichen Querschnittsdurchmesser von 0,5 bis 2,5 cm. Entsprechend ihrer Herstellung aus einem Einzelfadenstrom in einer Erzeugereinrichtung nach Figuren 1 und 2 besitzen diese Schaumstoffteilchen im teilweise gehärteten Zustand vorwiegend kreisrunden Querschnitt.

Nachdem die diskreten Harnstoff-Formaldehydharzteilchen geformt und gehärtet sind, werden sie dann gleichmäßig in einem fließfähigen Harnstoff-Formaldehydharzschaum verteilt, um ein Gemisch zu erzielen, das eine kohärente Masse darstellt. Im allgemeinen liegt in diesem Gemisch das Volumenverhältnis von gehärteten Schaumstoffteilchen zu ungehärtetem Schaum zwischen 1:1 und 4:1 und vorzugsweise um 3:1. Dieses Verhältnis kann in Abhängigkeit vom jeweiligen Typ des verwendeten Harnstoff-Formaldehydharzes variiert werden. Hat z.B. der Schaum einen verhältnismäßig hohen Feststoffgehalt, so kann das Volumen-Verhältnis von trockenen Schaumstoffteilchen zu ungehärtetem Schaum niedriger gewählt werden. Auch andere physikalische Eigenschaften des ungehärteten Schaumes, wie z.B. die im Schaum enthaltene Luftmenge, seine Dichte,

14

Viskosität und Gelierungszeit können das gewünschte Volumenverhältnis zwischen den beiden genannten Komponenten beeinflussen.

Zum Mischen der beiden Komponenten wird vorzugsweise die weiter unten im einzelnen beschriebene Mischvorrichtung 11 verwendet. Das erhaltene Gemisch läßt sich natürlich schneller härten als ein Schaumstoffkörper gleicher Form und Größe, der nur aus ungehärtetem Schaum hergestellt wurde.

Nach dem Vermischen des ungehärteten Schaums mit den gehärteten Schaumstoffstückchen wird der Gemischmasse durch Formen die gewünschte Gestalt des gehärteten Endprodukts gegeben.

Es wird im allgemeinen die Form eines länglichen Blockes oder einer Platte bevorzugt , obgleich die Erfindung nicht auf solche Formen beschränkt ist.

Erfindungsgemäß wird die erhaltene Gemischmasse vorzugsweise auf der Formungseinrichtung 12 (Fig. 1) geformt, welche weiter unten im Einzelnen beschrieben wird.

Nachdem dem teils ausgehärteten, teils ungehärteten Gemisch seine gewünschte Form gegeben wurde, wird die abschließende Aushärtung vorzugsweise durch Erwärmen erreicht, obwohl diese Aushärtung auch bei Zimmertemperatur vorgenommen werden kann.

Im allgemeinen ist vorauszusetzen, daß eine Aushärtung ohne zusätzliche Erwärmung eine bedeutend längere
Zeit beansprucht. Nachdem die Aushärtung der gewünschten
Formkörper erfolgt ist, können diese vorteilhaft in ein
geeignetes Packmaterial wie Polyäthylen oder eine Alumi-
nium-Kunststoff-Folie eingehüllt, oder mindestens eine
große Seite einer Platte mit einer solchen Folie als
"Feuchtigkeitsbarriere" bedeckt werden. Ein solches Bedecken oder Einwickeln kann mit Hilfe bekannter Methoden
erfolgen.

Es ist erwünscht, den Gehalt an gehärteten Harnstoff-Formaldehydharz-Schaumstoffteilchen in dem aus der
Mischvorrichtung ausgetragenen Gemisch so hoch wie möglich zu halten, so daß jedoch eine kohärente Masse gebildet wird, da bei Verwendung eines Höchstgehalts an
Schaumstoffteilchen das Gemisch weniger Wasser und, falls
die ungehärtete Harzlösung freien Formaldehyd okkludiert
enthält, auch weniger an dieser unerwünschten Beimischung
enthält, die aus dem vollständig ausgeharteten Produkt
entfernt sein müssen, um für das letztere ein Minimum an
Schrumpfung und Verwerfung zu erzielen.

Unter Bezugnahme auf die Figuren im allgemeinen
und insbesondere auf Fig. 1 ist in dieser eine erfindungsgemäße Anlage zur Durchführung des Verfahrens nach
der Erfindung illustriert, welche einen schematisch dargestellten Schaumerzeuger 13 zur Erzeugung eines Harnstoff-Formaldehydharzschaumes A ausgehend von einer Reserve von Harnstoff-Formaldehydharzlösung mittels in der Technik bekannten Methoden umfaßt. Der darin erzeugte Schaum A wird nun in den Teilchenerzeugerturm 10 der Erzeugereinrichtung 10' injiziert.

Die Temperatur im Erzeugerturm 10 wird vorzugsweise über der Umgebungstemperatur gehalten und zwar so hoch, daß die relative Feuchtigkeit im Turm 10 unter 50% beträgt. Hierzu kann ein Lufterhitzer 14 dienen, in welchem für den Erzeugerturm 10 bestimmte Ergänzungsluft erwärmt wird, um den Turm auf der gewünschten Temperatur zu halten.

Die Erzeugereinrichtung 10' dient dazu, aus dem Harnstoff-Formaldehydharzschaum A diskrete Schaumstoffteilchen A' zu erzeugen, die teilgehärtet und formbeständig sind. Der Erzeugerturm 10 hat einen Außenmantel 16 und in dessen Inneren ein Führungsrohr 18, das vorzugsweise entlang der zentralen Längsachse des Außenmantels 16 angeordnet ist.

Da ungehärteter Harnstoff- Formaldehydharzschaum A im Erzeugerturm 10 unter Entfernung von Wasser aus dem Schaum teilweise gehärtet werden soll, ist es wünschenswert, im Turm eine allgemein unter 50% liegende relative Feuchtigkeit aufrechtzuerhalten, damit die Bedingungen zum Verdunsten von Wasser aus den Schaumstoffteilchen in hinreichendem Maße gegeben sind. Die relative Feuchtigkeit wird im Turm 10 mit Hilfe eines Systems von Lufterhitzung und Luftzirkulation in den gewünschten Grenzen gehalten. Ein Gebläse 20 dient dazu, Luft 22 durch eine Luftzufuhrleitung 24 und einen als Lufteinführungseinrichtung dienenden Einblasstutzen 24a im senkrechten Führungsrohr 18 aufwärts einzublasen. Eine Schaumzufuhrleitung 26 geht vom Schaumerzeuger 13 aus und endet koaxial mit dem Einblasstutzen 24a in einer Injektionsdüse 26a (Fig.2). Diese gestattet das Injizieren eines im Führungsrohr 18 aufwärts gerichteten Einzelfadenstromes von Harnstoff-Formaldehydharzschaum A, der dabei von einem im gleichen Sinne gerichteten Luftstrom 22 aus dem Einblasstutzen 24a umhüllt ist und durch ihn zusammengehalten wird. Die lichte Weite der Injektionsdüse 26a beträgt vorzugsweise 2 bis 2,5 cm. Die Schaumzufuhrleitung 26 kann auf ihrer Innenwandung mit einem Material von geringem Reibungskoeffizienten wie z.B. Tetrafluoräthylen-Fluorkohlenstoffpolymer (z.B. Teflon [R] ) ausgebildet sein, um ihre Reinigung zu erleichtern.

Vorzugsweise verhält sich die Geschwindigkeit, mit der die Luft aus dem Einblasstutzen 24a in das Führungsrohr 18 eingeblasen wird, zur Geschwindigkeit des aus der Injektionsdüse 26a ausgetriebenen Einzelfaden-Schaumstrom wie 10 : 1. Der größere Anteil der in den Turm 10 eingeblasenen Luft verläßt diesen wieder durch die Luftauslaß-

18

öffnung 28, die am oberen Ende 10a des Turmes 10 vorgesehen ist. Ein in der Öffnung 28 angebrachter, durch einen Motor mit Triebwelle 32 angetriebener Ventilator 30
unterstützt den Abzug der Luft aus dem Turm 10 und zieht
Luft aus der Außenkammer 19 im Turmaußenmantel 16 unter
Drehung im Sinne des Ventilators 30 zu diesem hin.

Im oberen Turmende 10a ist dicht unterhalb der
Luftauslaßöffnung 28 und oberhalb des oberen Endes 18a
des Führungsrohres 18 ein kegelförmig mit der Spitze nach
unten gerichtetes Abprallelement 34 angebracht, an welchem die aufwärts zur Öffnung 28 hin strömende Luft unter
der erwähnten Drehung abgelenkt wird, und der Einzelfaden-
Schaumstrom prallt daran ebenfalls unter Zerbrechen in
diskrete Schaumstoffteilchen A' und Umlenkung nach der
Peripherie zum Außenmantel 19 hin ab.

Die durch die Öffnung 28 am oberen Ende 10a des
Turmes 10 austretende Luft wird in einen wieder in den
Turm zurückzirkulierenden Luftstrom durch Luftrückleitung
36 und einen über den Luftablaß 38 aus dem System entfernten Anteil an Ablaßluft gespalten, wobei mit letzterem
Feuchtigkeit aus der Erzeugereinrichtung 10' entfernt wird.

Der Erzeugerstrom 10 hat einen Boden 40, der vorzugsweise die Form eines mit der Spitze nach unten weisenden Kegelmantels besitzt. Dies erleichtert eine Ansammlung
der herabgefallenen diskreten Schaumstoffteilchen A' nach der Mitte des Turmbodens 40 zu und damit deren Absaugung über eine Saugleitung 46. Beim Auftreffen auf den Turmboden 40 müssen die Schaumstoffteilchen A' genügend gehärtet sein, so daß sie formbeständig sind und von einander getrennt bleiben. Daher hängen die Parameter, nach denen der Turm 10 ausgelegt ist und die im Turm 10 einzuhaltenden Temperaturbedingungen von der Gelierungszeit und der Aushärtungszeit des verwendeten Schaumes ab.

Der kegelmantelförmige Boden 40 weist Löcher 41 als Durchlässe für Luft auf, die aus der Rückleitung 36 an die Unterseite des Bodens 40 geführt und durch die Löcher 41 hindurch in den Außenraum 19 des Turmes 10 strömt, wobei sie die auf dem Turmboden 40 liegenden Schaumstoffteilchen A' weiter härtet. Die aus der Leitung 36 durch die Durchlässe 41 im kegelmantelförmigen Boden 40 injizierte Luft bildet ein Luftkissen für die am oberen Ende 10a des Turmes gebildeten Schaumstoffteilchen A' und verlängert dadurch die Verweilzeit der Teilchen A' im Außenraum 19 des Turmes 10 und erhöht damit deren Härtungsgrad. Dies ist erwünscht, damit die Teilchen A' zum Zeitpunkt ihres Auftreffens auf den Turmboden 40 genügend gehärtet sind, um von einander getrennt zu bleiben und nicht etwa zusammenzukleben.

In der bevorzugten Durchführung des Turmbetriebes wird die Luft aus der Rückleitung 36 durch entsprechende Ausbildung der Durchlässe 41 tangential zur Außenwand 16

20

des Turmes 10 in dessen Außenraum 19 injiziert und unterstützt hiermit die obenerwähnte Rotation der Luft im Turmaußenraum 19. Vorzugsweise beträgt die gesamte Verweilzeit des Schaumes A und der Teilchen A' im Turm 10 vom Zeitpunkt des Eintritts des Schaumes in das Führungsrohr 18 bis zum Auftreffen der Teilchen A' auf dem Turmboden 40 etwa 30 bis 120 Sekunden.

Das Führungsrohr 18 ist von einem Doppelmantel 17 umgeben, zwischen dessen Außenwandung 17a und dessen Innenwandung 18b, welche die eigentliche Wandung des Führungsrohrs 18 darstellt, sich ein Mantelringraum 18c befindet, der an seinem unteren Ende unterhalb des Turmbodens 40 in eine Luftrückleitung 25 mündet.

Im oberen Teil des Doppelmantels 17 befinden sich in der Mantelaußenwandung 17a eine Anzahl Einsaugeinlässe 42 , die von kegelmantelförmig nach außen und unten geneigten, an der Mantelaußenwandung 17a befestigten und die Lufteinlässe 42 gegen Eindringen von Schaumstoffteilchen A' schützenden Ringflanschen 42a überdacht sind. Einlässe 42 und Ringflansche 42a sind in verschiedenen Höhen am Doppelmantel 17 des Führungsrohres 18 vorgesehen. Mittels einer durch das Gebläse 20 erzeugten Saugkraft wird Luft aus dem Turmaußenraum 19 durch die Einsaugeinlässe 42 in den Mantelringraum 18c hinein und in diesem abwärts in die Luftrücksaugleitung 25 zurückgesogen. Hierdurch ent-

21

steht im Turmaußenraum 19 ein radial einwärts gerichteter Luftstrom in die Einsaugeinlässe 42 hinein, der der Zentifugalbewegung der frisch gebildeten Schaumstoffteilchen A' entgegenwirkt und sie in die im Außenraum 19 rotierende Luft hineinzieht und dadurch von einem Auftreffen auf die Turmaußenwand 16 und einem eventuellen Ankleben an dieser im dem oberen Führungsrohrende 18a benachbarten Bereich derselben abhält. Gegebenenfalls kann die durch Luftrücksaugleitung 25 strömende Luft durch erhitzte Luft aus dem Lufterhitzer 14 ergänzt und so durch das Gebläse 20 mit erhöhter Temperatur über die Luftleitung 24 in das Führungsrohr 18 eingeblasen werden, um so die gewünschte Temperatur im Turm 10 aufrechtzuerhalten.

Auf dem unteren Bereich des Außenmantels 17a des Führungsrohres 18 unterhalb der Einsaugeinlässe 42 ist vorzugsweise ein großer, kegelmantelförmig nach außen und unten geneigter Ablenkflansch 44 angebracht, der die Teilchen A' in diesem Bereich nach außen ablenkt und so auf seiner Unterseite eine sich zum mittleren Bereich des Turmbodens 40 erstreckende Ruhezone schafft, in welcher sich die hinreichend formbeständigen,weitgehend oder vollständig gehärteten Schaumstoffteilchen A' in Ruhe auf dem Boden 40 ansammeln können.

Die dort angesammelten Teilchen A' werden dann pneumatisch über die Absaugleitung 46 in einen Vorratsbehälter 48 überführt, in welchem ihre Aushärtung vervollständigt wird. Ihre vollständige Aushärtung kann mehrere Stunden bis zu einem Tag oder mehr benötigen. Um diesen Härtungsprozeß zu beschleunigen, kann erhitzte Luft durch den Boden des Vorratsbehälters 48 über entsprechende Einlässe (nicht gezeigt) eingeblasen werden. Auch wird die Temperatur im Vorratsbehälter 48 zur Beschleunigung des Härtungsvorganges vorzugsweise leicht erhöht gehalten. Dabei ist der Vorratsbehälter 48 vorzugsweise so ausgelegt, daß die zuerst in ihn eingesaugten Teilchen auch zuerst aus ihm entnommen werden. Mehrere solche Vorratsbehälter können in der erfindungsgemäßen Anlage eingesetzt werden, um stets einen genügenden Vorrat an gehärteten Harnstoff-Formaldehydharz-Schaumstoffteilchen zur Verfügung zu haben.

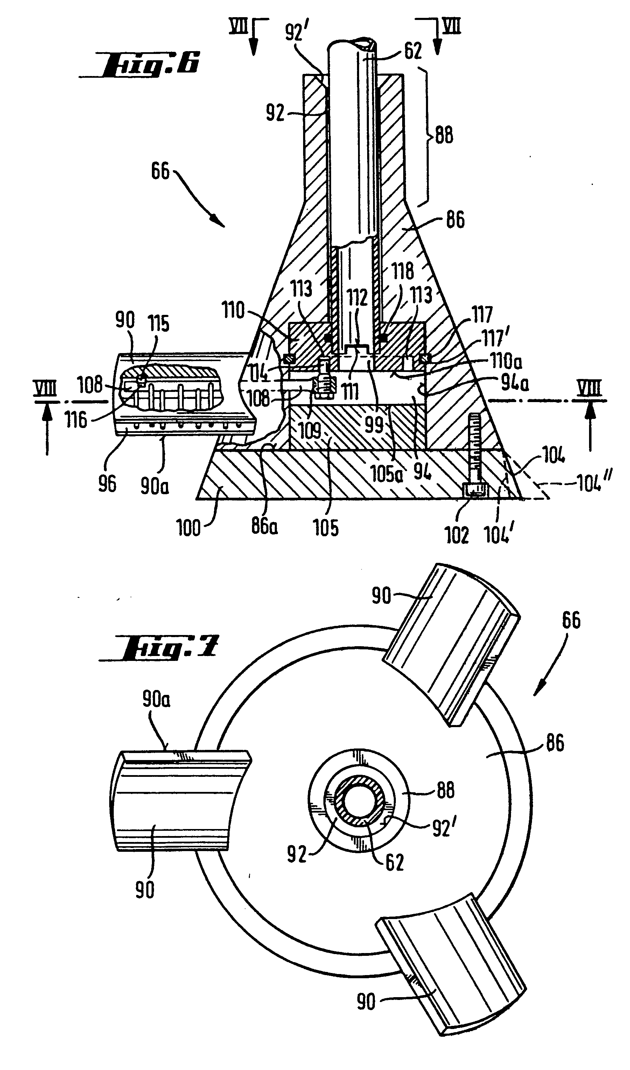

Beim nächsten Schritt im erfindungsgemäßen Verfahren werden gehärtete Teilchen A' gleichmäßig mit ungehärtetem (fließfähigeem) Harnstoff-Formaldehydharzschaum kombiniert. Die Teilchen A' werden vorzugsweise pneumatisch aus dem Vorratsbehälter 48 über die Leitung 52 in eine Einfülltrichtervorrichtung 50 befördert. Der Boden 50a des Einfülltrichters 50 steht durch eine Auslaßöffnung 51' mit der Einlaßöffnung 57 des Gehäuses 58 einer Mischvorrichtung 11 in Verbindung (Figuren 1 und 3). Eine Luftrückleitung 54 und ein Filter 55 sind im oberen Teil der Einfülltrichtervorrichtung 50 vorgesehen und bilden einen Teil der im übrigen nicht dargestellten pneumatischen Förderanlage zum

23

Transport der Teilchen A' zum Einfülltrichter 50. Der letztere ist vorzugsweise auch mit einem Schaufelförderrad 56 ausgerüstet, welches gehärtete Teilchen A' in die Mischvorrichtung 11 bewegt.

Die Mischvorrichtung 11 dient zum Mischen von gehärteten Teilchen A' mit ungehärtetem Harnstoff-Formaldehydharzschaum in gewünschten Mengenverhältnissen, die durch die respektiven Einfüllgeschwindigkeiten von Teilchen A' und flüssigem Schaum bei der Bildung der Mischung C bestimmt werden.

Wie in Fig. 1 gezeigt, wird der Schaum aus einem Schaumerzeuger 13' erhalten, der vom gleichen Typ wie der Schaumerzeuger 13 sein kann. Die Mischvorrichtung 11 umfaßt das erwähnte Gehäuse 58, einen Antriebsmechanismus 60, ein Schaumeinleitungsrohr 62, eine Förderschnecke 64 und einen Mischkopf 66 zum gleichmäßigen Vermischen der gehärteten Teilchen A' mit dem ungehärteten Schaum. Das Einleitungsrohr 62 wird durch eine Sperre 67 an der Drehung gehindert und leitet ungehärteten Schaum in den sich drehenden Mischkopf 66. Die Förderschnecke 64 umfaßt ein Schneckengewinde 68, das außen auf einer hohlen Schneckenwelle 70 befestigt ist. Der Mischkopf 66 sitzt auf einer Antriebswelle 72, durch die er in Drehung versetzt wird. Die Antriebswelle 72 ist hohl und so bemessen, daß sie koaxial mit der hohlen Welle 70 in deren Innerem gelagert werden kann. Die lichte Weite der hohlen Antriebswelle 72

24

ist so bemessen, daß das Schaumeinleitungsrohr 62 in ihr untergebracht werden kann und sich koaxial durch sie erstreckt. Die hohle Schneckenwelle 70 und die Antriebswelle 72 sind von einander und von dem feststehenden Schaumeinleitungsrohr 62 mittels Büchsen 74 und 76 getrennt gelagert und können unabhängig von einander rotieren. Die Büchse 78 gestattet es, die Förderschnecke 64 im Gehäuse 58 drehbar zu montieren. Zum Antriebsmechanismus 60 gehört ein Motor und Transmission 80 sowie ein Antriebszahnrad 82 für die Antriebswelle 72 und ein Antriebszahnrad 84 für die hohle Welle 70 der Förderschnecke 64, die schematisch in den Figuren 1 und 3 dargestellt sind.

Vorzugsweise wird die Förderschnecke 64 unter einem Winkel von 45° gegen die Horizontale geneigt montiert, um eine optimale Zufuhr der gehärteten Harnstoff-Formaldehydharzteilchen zu erreichen. Es wird hierdurch möglich, den ungehärteten Schaum an ungefähr der gleichen Stelle in der Formgebungsvorrichtung 12 gelieren zu lassen, an der auch die Teilchen aufgegeben werden. Der ungehärtete Schaum in der Mischung C geliert an einer auf die weiter unten beschriebene Kompressionszone 128 folgenden Stelle, und zwar vorzugsweise unmittelbar nach dem Verlassen dieser Zone 128. Der Mischkopf 66 ist auf der Antriebswelle 72 befestigt und rotiert im gleichen Drehsinn wie das Schraubgewinde 66 der Förderschnecke 64. Vorzugsweise dreht sich der Mischkopf 66 anderthalb bis zweimal so schnell wie das Schneckengewinde 68.

Der Mischkopf 66 weist ein kegelförmiges Gehäuse 86 mit einem Halsteil 88 auf, der an der Spitze des kegelförmigen Gehäuses 86 ansetzt. Vorzugsweise drei Schaumausgabeflügel 90 ragen radial zur Kegelachse des Gehäuses aus der konischen Seitenwandung des Gehäuses 86 heraus, wie dies in Fig. 7 gezeigt ist.

Das Halsteil 88 weist eine entlang der Mischkopfachse vorgesehene Ausnehmung 92 von kreisrundem Querschnitt auf, dessen Durchmesser etwas größer ist als der Außendurchmesser des Schaumzufuhrrohres 62, so daß das letztere in die Ausnehmung 92 lose eingesetzt werden und der Mischkopf 66 auch bei eingeführtem feststehendem Zufuhrrohr 62 rotieren kann. Vorteilhafterweise weist die Eingangsöffnung 92' der Ausnehmung 92 am oberen Ende des Halsteils 88 einen abgeschrägten Rand auf. Das kegelförmige Mischkopfgehäuse 86 weist im Inneren einen zylindrischen, vorzugsweise mit der Mischkopfdrehachse koaxial angeordneten Hohlraum 94 auf (Fig. 6)

Jeder der Schaumausgabeflügel oder-blätter 90 besitzt einen Ausgabeschlitz 96, der über einen Durchlaßkanal 98 (Fig. 8) mit dem zylindrischen Hohlraum 94 im Mischkopf 66 frei verbunden ist, so daß aus dem Zufuhrrohr 62 in den Hohlraum 94 gelangender Schaum durch die Ausgabeschlitze 96 der Schaumausgabeflügel 90 in die Zwischenräume zwischen den die Flügel 90 umgebenden Schaumstoffteilchen injiziert werden kann. Der Ausgabeschlitz 96 erstreckt sich vorzugsweise über die gesamte Länge der nachlaufenden Kante, d.h. derjenigen Kante 90a des Ausgabeflügels 90, die der bei Drehung des Mischkopfes 66 vorauslaufenden Kante des Ausgabeflügelblattes 90 gegenüber liegt. So kann z.B., wie in Fig. 8 gezeigt, der Mischkopf entgegen Uhrzeigersinn rotieren, wobei dann die Schaumausgabe-Auslaßschlitze 96 an den Kanten 96 im Uhrzeigersinn öffnen. Vorzugsweise hat jeder der Ausgabeflügel 90 rechteckige Gestalt und an seinem äußeren freien Ende eine leicht konvexe Krümmung. Wie in Figuren 6 und 7 gezeigt ist, sind die Schaumausgabeflügel 90 vorzugsweise so montiert, daß die vom Schneckengewinde 68 gegen die Oberfläche eines Ausgabeflügels 90 gerichteten Schaumstoffstückchen so auf diese Oberfläche auftreffen, daß sie zu der den Ausgabeschlitz 96 enthaltende Kante des betreffenden Ausgabeflügels hin abgelenkt werden.

Eine Rückdruckplatte 100 ist auf der Grundfläche 86a des kegelförmigen Mischkopfgehäuses 86 durch geeignete Mittel, z.B. eine angemessene Anzahl Halteschrauben 102 befestigt. Der Umfangsrand 104 der Platte 100 kann dabei mit der kegelmantelförmigen Seitenwandung des Gehäuses 86 fluchten oder auch nach innen oder außen mehr oder weniger stark abgeschrägt sein, wie dies durch die gestrichelten Linien 104' bzw. 104" in Fig. 6 angedeutet ist. Hierdurch wird die Mischcharakteristik des Mischkopfes 66 entsprechend variiert. Vorzugsweise wird auf der zum Mischkopf 66 hingewandten Oberseite der Platte 100 eine Abstandsplatte 105 aufgesetzt, deren Oberseite 105a die untere Begrenzungsseite des zylindrischen Hohlraums 94 darstellt. Durch Einsetzen von Abstandsplatten 105 verschiedener Dicke kann das Volumen des Hohlraumes 94 etwas variiert werden.

Jeder der Schaumausgabeflügel 90 ist mit einer Bürste 106 versehen, mit deren Hilfe der Schaumausgabeschlitz 96 des betreffenden Flügels von ihn verstopfenden Teilchen freigehalten werden kann. Die Bürste 106 besitzt eine Anzahl Reinigungsdrähte oder -borsten 107, welche im Abstand voneinander auf einem Bürstenarm 108 befestigt sind, der sich entlang des Ausgabeschlitzes 96 und durch den Durchlaßkanal 98 hindurch erstreckt und der an seinem in den Hohlraum 94 hineinragenden Ende ein Muffenteil 109 trägt. Die Bürste 106 ist dabei für radiale Hin- und Herbewegung in Bezug auf die Kegeldrehachse des Gehäuses 86 ausgebildet, und zwar mittels einer Exzenterscheibe 110, die im Hohlraum 94 koaxial mit der Mischkopfdrehachse am unteren, freien Ende des feststehenden Schaumzufuhrrohres 62 mit diesem mittels einer in eine Ausnehmung 112 am unteren Rand des Rohres 62 eingreifenden Nase 111 fest verbunden gelagert ist. Vorzugsweise sind eine zweite Ausnehmung 112 und eine zweite Nase 111 auf der gegenüberlie-

28

genden Seite des Rohrrandes bzw. der Exzenterscheibe vorgesehen. Die Exzenterscheibe 110 weist einen axialen Durchlaß 99 auf, durch welchen hindurch das Innere des Schaumzufuhrrohres 62 mit dem zwischen Exzenterscheibe 110 und Abstandsplatte 105 freigelasenen Teil des Hohlraumes 94 in freier Verbindung steht.

Die Exzenterscheibe wird in ihrer Stellung im oberen Teil des Hohlraumes 94 des Mischkopfgehäuses 86 mittels eines Halteringes 117 gehalten, der in einen entsprechenden, durch fluchtende Ringnuten in der Seitenwandung 94a des zylindrischen Hohlraumes 94 und in der Seitenwandung der Exzenterscheibe 110 gebildeten Ringraum 117' eingelegt ist. Der Haltering 117 ist vorzugsweise ein O-ring, der auch gleichzeitig eine Dichtung zwischen dem Gehäuse 86 und der Exzenterscheibe 110 darstellt und verhindert, daß Flüssigkeit aus dem Hohlraum 94 in den Ringraum zwischen dem Mischkopfgehäuse 86 und der Außenseite des Schaumzufuhrrohres 62 gelangen kann. Ein weiterer O-ring 118 ist in einer entsprechenden Ringnut 118' in der Innenwand des Durchlasses 99 in der Exzenterscheibe 110 eingesetzt und bildet eine zweite Dichtung zwischen dieser und dem Schaumzufuhrrohr 62, welche verhindert, daß Schaum oder Flüssigkeit aus dem Hohlraum 94 in den Ringspalt zwischen Zufuhrrohr 62 und der die Bohrung 92 umgebenden Wandung des Mischkopfgehäuses 86 zurückgedrückt wird.

Auf ihrer Unterseite 110a besitzt die Exzenterscheibe 110 ein zur Mischkopfachse exzentrisch verlaufende kreisrunde Ringausnehmung 113, in welche ein in das Muffenteil 109 des Bürstenarmes 108 eingesetzter, gegebenenfalls, wie in Fig. 6 gezeigt, eingeschraubter Nocken 114 lose eingreift. Bei der Drehung des Mischkopfgehäuses 86 um das feststehende Zufuhrrohr 62 durchläuft der Nocken 114 die kreisrunde Ringausnehmung 113 und bewegt dadurch den Bürstenarm 108 und die von ihm getragene Bürste 106 im Flügel 90 hinundher, wobei die Bürste 106 durch einen Führungszapfen 115 geführt wird, der in jedem der Schaumausgabeflügel 90 vorgesehen ist und sich in den Ausgabeschlitz 96 erstreckt. Der Führungszapfen 115 besitzt einen Schlitz 116, in welchen ein Teil des Bürstenarmes 108 hineinragt, um die Bürste 106 bei ihrer Hin- und Herbewegung im Schaumausgabeflügel 90 zu führen.

Das Gehäuse 58 trägt an seinem Ausgangsende eine vorzugsweise trichterförmig nach unten erweiterte Ausgaberutsche 119, aus welcher die in der Mischvorrichtung 11 mittels des Mischkopfes 66 erzeugte Mischung C von gehärteten Schaumteilchen und ungehärtetem Schaum aus Harnstoff-Formaldehydharz auf das Formungsförderband 122 gelangt. Durch den nach unten zunehmenden Querschnitt der Ausgaberutsche 119 wird die Masse der Mischung C über eine genügend breite Fläche auf dem Förderband/der Formgebungseinrichtung 12 verteilt, um den Eingang des Förderbandes 122 der Formgebungseinrichtung 12 zu füllen.

Daher ist auch Mischkopf 66 vorteilhafterweise kegelförmig gestaltet, wodurch die gehärteten Schaumstoffteilchen A' über eine breitere Querschnittsfläche verteilt werden,und dabei das Mischen mit dem ungehärteten Schaum erleichtert wird, und wodurch die Bildung von Lufttaschen in der Mischung C bei der Ausgabe über die Rutsche 119 verhindert wird. Auch wird die von Teilchen A' erfüllte Querschnittsfläche innerhalb der Rutsche 119 im dem Mischkopf 66 benachbarten Bereich konstant gehalten, um das Ausfüllen von leeren Zwischenräumen zwischen den Teilchen A' durch ungehärteten Schaum herbeizuführen.

Die Formgebungseinrichtung 12 dient als Formmaschine und umfaßt vier verschiedene Förderbänder, ein oberes Förderband 120, ein unteres Förderband 122, ein erstes Seitenförderband 124 auf der im durch einen Pfeil angedeuteten Fördersinne rechten, und ein zweites Seitenförderband 126 auf der im Fördersinne linken Seite der Formgebungseinrichtung 12, wie dies in Fig. 9 schematisch dargestellt ist.

Das obere Förderband 120 befindet sich vom unteren Förderband 122 in einem Abstand, der der gewünschten Dicke des herzustellenden Formstückes, insbesondere einer Platte oder einem Block entspricht. Die beiden Seitenförderbänder 124 und 126 sind parallel und in einem Abstand voneinander

31

angeordnet, welcher der gewünschten Breite des herzustellenden Formstückes entspricht, außer in einer Kompressionszone 128, in welcher das linke und das rechte Seitenförderband 124 bzw. 126 allmählich auf einander zulaufen, während die zwischen den vier Förderbändern eingeführte Mischung C in dieser Zone 128 beim Passieren durch dieselbe zunehmend zusammengedrückt wird, was dabei bewirkt, in der Masse noch vorhandene unerwünschte Lufteinschlüsse auszufüllen und die Bildung einer praktisch gleichförmigen Masse aus gehärteten Teilchen und ungehärtetem Schaum zu vervollständigen. Außerdem bildet die Zone 128 eine Akkumulationszone, in welcher geringe Schwankungen der ausgestoßenen Menge an Mischung C ausgeglichen werden und der Formgebungseinrichtung 12 stets eine genügende Menge an Mischung C zugeführt wird, um das Entstehen von unerwünschten Lücken zu verhindern.

Die vier Förderbänder 120, 122, 124 und 126 schliessen also eine Querschnittsfläche ein, die den gewünschten Abmessungen und damit der gewünschten Querschnittsform des als Enderzeugnis geforderten vollständig ausgehärteten Formstücks aus Harnstoff-Formaldehydharz entspricht, und weisen eine Kompressionszone 128 auf, die der Zone mit dem obengenannten gewünschten Querschnittsfläche vorgeschaltet ist.

32

Im allgemeinen werden kleine Toleranzen vorgegeben, die eine bei der endgültigen Aushärtung auftretende leichte Schrumpfung berücksichtigen. Die Formgebungseinrichtung 12 besitzt einen Antriebsmechanismus 130, der ein System von Riemen und Rollen zum Antrieb der Förderbänder mit der gewünschten Geschwindigkeit umfaßt. Alle Förderbänder sollten mit ein und derselben Geschwindigkeit betrieben werden.

Eine Gegenhalterung 130a verhindert ein Ausbiegen der Seitenförderbänder 124 und 126 nach auswärts unter der Wirkung des in der Kompressionszone 128 auf die Mischung C ausgeübten Druckes. Sie umfaßt Rückhalteplatten 130b und Gegenhaltearme 130c, wie in Fig. 9 gezeigt ist. Die Gegenhalterung 130a gestattet auch eine Einstellung des Abstandes der beiden Seitenförderbänder 124 und 126/. voneinander

Fig. 5 illustriert eine andere Ausführungsform der Eingangszone der Formgebungsvorrichtung 12. In der Kompressionszone 128 ist eine in senkrechter Stellung zum unteren Förderband 122 angeordnete Stange 131 vorgesehen, welche sich auch von dieser Zone aus rechtwinklig abgebogen in Strömungsrichtung in den von den vier Förderbändern 120, 122, 124 und 126 begrenzten Raum erstreckt. Die Längsachse des rechtwinklig abgebogenen Teils soll sich dabei parallel zu den Förderbändern in Förderrichtung erstrecken. Die Stange 131 schafft in der zwischen den vier Förderbändern transportierten Masse der Mischung C eine Höhlung 131'. Hierdurch können die schließlich gemäß der Erfindung erzeugten Formkörper, insbesondere Blöcke oder Platten leichter/und unter Materialersparnis hergestellt
am Gewicht
werden, ohne daß ihre Isolierungseigenschaften wesentlich vermindert werden. Auch können gleichzeitig mehrere solche Stangen 131 nebeneinander verwendet werden, wodurch in den Formkörpern eine entsprechende Anzahl Leerräume erzeugt werden.

Beim Verlassen der Formgebungsvorrichtung 12 liegt die Mischung C als formbeständiger Körper in Strangform vor, der bereits das gewünschte Profil in den gewünschten Dimensionen besitzt.

Dieser Strang wird nun in ein Schneidgerät 132 eingeführt, in welchem er in Formkörper 144, insbesondere Blöcke oder Platten der gewünschten Länge zerschnitten wird. Das Schneidgerät 132 besitzt ein Schneidmesser 134 und einen Antriebsmechanismus 136, der das Messer 134 in Bezug auf den am Messer vorbeigeführten geformten Strang vorwärts bewegt oder wieder zurückzieht. Der Betrieb des Schneidgeräts 132 kann mit Hilfe einer mit dem Schneidgerät 132 in Verbindung stehenden Meßeinrichtung 138 gesteuert werden, die ein lose drehbares Rad 140 enthält, das auf der Oberfläche der Mischung C drehend aufsitzt, während diese unter dem Rad 140 vorbeigeführt wird und dadurch das Rad in Drehung versetzt. Dieses Rad 140 ist wiederum mit einem Zähler 142 verbunden, und sobald eine gewünschte Länge des Stranges, die durch die Umdrehungen des Rades 140 bestimmt und vom Zähler 142 registriert wird, die Meßeinrichtung 138 passiert hat, sendet die letztere ein Signal an das Schneidgerät 132, und das Schneidmesser 134 wird betätigt.

Nachdem der Strang der formbeständigen Mischung C nun in Formkörper 144, insbesondere Blöcke oder Platten, zerschnitten wurde, werden diese vorzugsweise einem Ofen 146 zugeführt, in welchem sie vollständig ausgehärtet werden. Der Ofen 146 umfaßt einen Heizteil 148, welcher den Ofen auf der gewünschten Temperatur hält, und ein Ofenförderband 150, welches die Formkörper 144 durch den Ofen 146 bewegt. Die Abgase des Ofens 146 werden vorzugsweise in einen Wäscher (nicht gezeigt) geleitet, in welchem allenfalls vorhandenes Formaldehyd, welches, falls es im Ausgangsharz okkludiert war, im Ofen 146 aus den Formstücken entweicht, aus den Abgasen entfernt wird. Typische Ofentemperaturen liegen zwecks Herabsetzung des Feuchtigkeitsgehalts der Formkörper auf ein gewünschtes Höchstmaß bei 170 bis 300°C.

Im allgemeinen hängt das optimale Trocknungsniveau vom Gleichgewichtsgehalt an Wasser im Schaum bei einer bestimmten Umgebungstemperatur und -feuchtigkeit ab. So liegt z.B. für einen typischen ausgehärteten Harnstoff-Formaldehydharzschaum bei 22°C und 50% relativer Feuchtigkeit der Gleichgewichtswassergehalt bei 7% berechnet auf das Gesamtgewicht des Formkörpers.

Vorteilhafterweise umfaßt die erfindungsgemäße Anlage auch eine Beschichtungs- oder Verpackungseinrichtung 152, in welcher auf den Formstücken, z.B. auf einer großen Seite einer Platte, eine wasserundurchlässige Schicht (water barrier) z.B. aus Aluminiumfolie aufgeklebt wird, oder auch die ausgehärteten Formstücke vollständig in ein geeignetes Verpackungsmaterial, z.B. Polyäthylenfilm oder Aluminiumfolie eingewickelt werden. Als Verpackungsmaterial kann z.B. auch ein Laminat aus Aluminiumfolie und Polyäthylenfilm dienen. Zum Verpacken kann jede bekannte hierzu geeignete Vorrichtung dienen. Eine solche Vorrichtung, die z.B. in Fig. 1 mit dem Bezugszeichen 152 bezeichnet ist, umfaßt eine Verpackungsstraße 154, auf welcher die ausgehärteten Formkörper durch die Verpackungsvorrichtung 152 transportiert werden, Verpackungsmaterial ausgebende Rollen 156, Verpackungsmaterialschneidgeräte 158 zum Abschneiden einer Portion Verpackungsmaterial, sobald ein ausgehärtetes Formstück sich zwischen erforderlichen Lagen von Verpackungsmaterial befindet, und ein Verpackungsofen 160, der bei einer Temperatur bestrieben wird, die genügt, um aus den abgeschnittenen Lagen von Verpackungsmaterial eine geschlossene Umhüllung um das Formstück zu bilden. Die verpackten Formstücke sind dann gebrauchsfertig und können je

36

nach Bedarf versandt oder gelagert werden.

Falls die Herstellung des Harnstoff-Formaldehydharzes nach einer Methode erfolgte, bei der im Endprodukt noch freier Formaldehyd okkludiert ist, so kann Harnstoffpulver mit dem Formstück mitverpackt werden, um hierdurch noch eventuell aus dem Formstück innerhalb der Verpackung ausdiffundierenden Formaldehyd zu absorbieren bzw. zu binden. Vorzugsweise sollte jedoch aus dem zur Verpackung bereiten Formstück weder Formaldehyd noch Wasser abge- schieden werden.

Es ist bei dem erfindungsgemäßen Verfahren nicht kritisch, daß eine bestimmte Harnstoff-Formaldehydharzlösung verwandt wird, so lange nur die Lösung gestattet, aus ihr einen Harnstoff-Formaldehydharzschaum zu erzeugen.

Bei der Herstellung einer Mischung von Harzlösung und Härtemittel ist es im allgemeinen wünschenswert, eine solche Mischung mit einem Festgehalt von 40 bis 50 Gew.-% zu verwenden, um die gehärteten Harnstoff-Formaldehydharz-Schaumstoffteilchen zu erzeugen, während zur Erzeugung des mit den Schaumstoffteilchen zu vermischenden ungehärteten Schaumes vorzugsweise eine Mischung von Harzlösung und Härtemittel verwendet werden sollte, deren Feststoffgehalt etwa 16 bis 25 Gew.-% beträgt.

Ein bevorzugtes flüssiges Harnstoff-Formaldehydharz wird unter dem Handelsnamen Aerolite 333 von der Ciba-Geigy Corporation, Ardsley, New York auf den Markt gebracht. Bevorzugte Harnstoff-Formaldehydharze zur Herstellung von mit den gehärteten Harnstoff-Formaldehydharz-Schaumstoffteilchen zu vermischendem Harnstoff-Formaldehydharzschaum sind unter anderem Harnstoff-Formaldehydharze und deren Kombinationen, die von der Ciba-Geigy Corporation unter den folgenden Handelsnamen, und im Falle von Kombinationsharzen unter den angegebenen Gewichtsverhältnissen, auf den Markt gebracht werden: Aerolite UL 333; Aerolite UL 333 und Aerolite 327-Mischungen im Gewichtsverhältnis 1 : 1; Aerolite 333 und Aerolite 306 im Gew.-verhältnis 1 : 1; Aerolite V und Aerolite 327 im Gew./ -verhältnis 1 : 1; Aerolite CBU und Aerolite 327 im Gew. Verhältnis 1 : 1; und eine Mischung von Aerolite 306 und Aerolite 327 in einem Gewichtsverhältnis von 3 : 1. Bevorzugte Härtungsmittel für die vorstehend genannten Harzlösungen sind z.B. die von der Ciba-Geigy Corporation unter den folgenden Handelsnamen auf den Markt gebrachten : Aerolite HL 703, Aerolite XD 824 und Aerolite D 892. Diese Härtungsmittel sind Mischungen von Phosphonsäure und Dodecylbenzolsulforsäure. Aerolite HL 703 und Aerolite D 892 enthalten auch noch p-Toluolsulfonsäure. Vorteilhafterweise werden eine bevorzugte Harzlösung oder Lösungen mit einem bevorzugten Härtemittel im Gewichtsverhältnis 1 : 1 verwendet.

Auch können andere Zusatzstoffe den gehärteten Teilchen vor deren Vermischung mit ungehärtetem Schaum zugesetzt werden. So kann z.B. ein Zusatz von Material zur Bildung einer Feuerbarriere wie ein pH-ausgeglichener Vermikulit, der weder die gehärteten Teilchen noch den ungehärteten Schaum nachteilig beeinflußt, beigefügt werden, um ein Endprodukt zu erhalten, das als Feuerbarriere wirkt. Andererseits kann z.B. ein Fasermaterial wie Glasfasern oder Baumwolle eingebracht werden, um dem fertigen Formkörper größere Festigkeit zu verleihen.

P a t e n t a n s p r u c h e

1. Verfahren zur Herstellung von geformten Körpern, insbesondere wärmeisolierenden Platten, aus vollständig gehärtetem Harnstoff-Formaldehydharz-Schaumstoff, welcher einen die mechanische Beständigkeit des Körpers erhöhenden Anteil an Füllstoffteilchen enthält, wobei die Teilchen mit einem aus einer ungehärteten Harnstoff-Formaldehydharzlösung erzeugtem ,fließfähigem Schaum gemischt werden, d a d u r c h  g e k e n n z e i c h n e t , daß

(a) ein überwiegender Teil oder der gesamte Anteil an Füllstoffteilchen aus formbeständigen, im wesentlichen stäbchenförmigen Harnstoff-Formaldehydharz-Schaumstoffteilchen besteht, deren Länge im Durchschnitt im Bereich von 1 bis 15 cm liegt und deren Dicke im Durchschnitt einen Durchmesser von 0,5 bis 2,5 cm aufweist, und die vorzugsweise durch Zerteilung eines Einzelfadens von ungehärtetem Harnstoff-Formaldehydharzschaum erzeugt und anschließend mindestens weitgehend oder vollständig ausgehärtet sind,

(b) diesen Teilchen der genannte Schaum unter Bildung eines Gemischs zugeführt wird, in welchem das Volumenverhältnis zwischen dem genannten Schaum und dem Anteil an Harnstoff-Formaldehydharz-Schaumstoffteilchen im Bereich von 1:1 bis 1:4 liegt, und

(c) das erhaltene Gemisch zuerst geformt und danach vollständig ausgehärtet wird.

2. Verfahren nach Anspruch 1, dadurch gekennzeichnet, daß das Volumenverhältnis gemäß (b) etwa 1:3 beträgt.

3. Verfahren nach Anspruch 1, dadurch gekennzeichnet, daß der Schaumanteil gleichmäßig zwischen den Schaumstoffteilchen verteilt ist.

4. Verfahren nach Anspruch 1, dadurch gekennzeichnet, daß das Formen des Gemisches unter Zusammendrücken desselben erfolgt.

5. Verfahren nach Anspruch 1, dadurch gekennzeichnet, daß die Zufuhr des Schaumes durch Injektion in eine Anhäufung der Schaumstoffteilchen erfolgt.

6. Verfahren nach Anspruch 1, dadurch gekennzeichnet, daß die Zerteilung und anschließende Härtung des Einzelfadens durch aufwärts gerichtete Injektion des letzteren in einen gleichgerichteten Luftstrom und Umlenken des Einzelfadens in radialer Richtung nach außen durch Aufprallen in einer oberen Endzone erfolgt.

7. Verfahren nach Anspruch 1, dadurch gekennzeichnet, daß der vollständig ausgehärtete Formkörper auf mindestens einer Seite mit einer Schicht von vorzugsweise wasserundurchlässigem Verpackungsmaterial bedeckt oder mit dem Verpackungsmaterial vollständig umhüllt wird.

8. Formkörper, insbesondere wärmeisolierende Platte, welcher im wesentlichen aus einem die mechanische Beständigkeit des Körpers erhöhenden Anteil an Füllstoffteilchen und einem die Zwischenräume zwischen den Füllstoffteilchen ausfüllenden Anteil an vollständig ausgehärtetem Harnstoff-Formaldehydharz-Schaumstoff besteht, dadurch gekennzeichnet, daß

(a) ein überwiegender Teil oder der gesamte Anteil an Füllstoffteilchen aus vollständig ausgehärteten, im wesentlichen stäbchenförmigen Harnstoff-Formaldehydharz- Schaumstoffteilchen besteht, deren Länge im Durchschnitt im Bereich von 1 bis 15 cm liegt und deren Dicke im Durchschnitt einen Durchmesser von 0,5 bis 2,5 cm aufweist, und

(b) daß in ihm das Volumenverhältnis zwischen dem die genannten Zwischenräume ausfüllenden Schaumstoff und dem Anteil an Harnstoff-Formaldehydharz-Schaumstoffteilchen im Bereich von 1:1 bis 1:4 liegt.

9. Anlage, die zur Herstellung von Formkörpern nach Anspruch 8 geeignet ist und dadurch gekennzeichnet ist, daß sie

(i) eine Erzeugereinrichtung (10) zur Erzeugung von formbeständigen, mindestens teilweise oder vollständig ausgehärteten, im wesentlichen stäbchenförmigen Harnstoff-Formaldehydharz-Schaumstoffteilchen (A'), aus einem fließfähigen, aus einer ungehärteten Harnstoff-Formaldehydharzlösung erzeugten Schaum (A);

(ii) eine an die Erzeugereinrichtung (10) angeschlossene Mischvorrichtung (11) zum Vermischen von Schaumstoffteilchen (A') aus der Erzeugereinrichtung (10) mit einem fließfähigen, aus einer ungehärteten Harnstoff-Formaldehydharzlösung erzeugten Schaum (B), und gegebenenfalls

(iii) eine an die Mischvorrichtung (11) angeschlossene Formgebungs- und Härtungseinrichtung (12), in welcher das aus der Mischvorrichtung (11) abgegebene Gemisch geformt und danach vollständig ausgehärtet wird, umfaßt.

43

10. Anlage nach Anspruch 9, dadurch gekennzeichnet, daß die Erzeugereinrichtung

(a) einen Turm (10) mit einer Luftauslaßöffnung (28) am oberen Turmende (10a) und mit einem mit Luftdurchlässen (41) versehenen Turmboden (40),

(b) ein mittig im Turm (10) senkrecht angeordnetes, sich vom Turmboden (40) bis etwas unterhalb der Luftauslaßöffnung (28) erstreckendes inneres Führungsrohr (18),

(c) eine Lufteinführungseinrichtung (24a) am unteren Ende des inneren Führungsrohrs (18), mittels welcher ein aufwärts gerichteter Luftstrom (22) in das Führungsrohr (18) injiziert werden kann,

(d) eine mittig zur Lufteinführungseinrichtung (24a) am unteren Ende des Führungsrohrs (18) angeordnete Einspritzvorrichtung (26a), mittels welcher ein flüssiger Einzelfaden (27) des genannten Schaumes (A) durch das Führungsrohr (18) mittig und von dem in gleicher Richtung injizierten Luftstrom (22) umgeben nach oben gespritzt werden kann, und

(e) eine zwischen dem oberen Ende (18a) des inneren Führungsrohrs (18) und der Luftauslaßöffnung (28) im Turm (10) mittig angeordnete Abpralleinrichtung (34) umfaßt, mittels welcher der auf sie aufprallende, auf seinem Weg durch das Führungsrohr (18) bereits teilweise vorgehärtete Einzelfaden (27) nach außen abgelenkt und

dabei in die im wesentlichen stäbchenförmigen Schaumstoffteilchen (A') zerbrochen wird, welche im das Führungsrohr (18) umgebenden Außenraum (19) des Turmes (10) auf den Turmboden (40) herabfallen und dabei durch einen durch die Luftdurchlässe (41) im Turmboden (40) nach dem oberen Turmende (10a) hin injizierten Luftstrom (37) verlangsamt und weiter gehärtet werden.

11. Anlage nach Anspruch 10, dadurch gekennzeichnet, daß das innere Führungsrohr (18) einen Doppelmantel (17) aufweist, in welchen durch in dessen Außenwandung (17a) vorgesehenen Einsaugeinlässe (42) aus dem Turmaußenraum (19) in diesem aufwärts strömende Luft (37) in einen Ringraum (17c) im Doppelmantel (17) eingesaugt und mittels eines Gebläses (20) durch diesen Ringraum (17c) nach unten abgesaugt und mittels der Lufteinführungseinrichtung (24a) wieder in den Innenraum des Führungsrohrs (18) injiziert werden kann, wodurch die Verweilzeit der im Turmaußenraum (19) herabfallenden Schaumstoffteilchen (A') verlängert und diese von der Außenwandung (16) des Turmes (10) weggelenkt werden.

12. Anlage nach Anspruch 11, dadurch gekennzeichnet, daß über den Einsaugeinlässen (42) schräg abwärts und nach außen gerichtete Ablenkringflansche (42a) vorgesehen sind, welche das Einsaugen von Schaumstoffteilchen (A') in den Ringraum (17c) verhindern.

13. Anlage nach einem der Ansprüche 10 und 12, dadurch gekennzeichnet, daß eine Luftumlaufleitung (36) am Turm (10) vorgesehen ist, durch welche durch die Luftauslaßöffnung (28) am oberen Turmende (10a) ausströmende Luft den Luftdurchlässen (41) im Turmboden (40) zugeführt wird und in den Außenraum (19) des Turmes (10) nach oben gerichtet einströmt.

14. Anlage nach einem der Ansprüche 10 bis 13, dadurch gekennzeichnet, daß im unteren Bereich des Turmes (10) an der Doppelmantel-Außenwandung/ (17a) nach abwärts und außen gerichtete Ablenkmittel (44) vorgesehen sind, durch welche herabsinkende Schaumstoffteilchen (A') nach außen abgelenkt werden, und wodurch unterhalb der Ablenkmittel (44) und über dem vorzugsweise einwärts und nach unten konisch abgeschrägten Turmboden (40) eine runde Absetzzone (19a) für die Schaumstoffteilchen (A') gebildet wird, und daß in dieser Zone die Einlaßöffnung (46a) einer Absaugleitung (46) zum Wegtransport der Schaumstoffteilchen (A') aus der Absetzzone (19a) untergebracht ist.

15. Anlage nach Anspruch 9, dadurch gekennzeichnet, daß die Mischvorrichtung (11)

(a) ein Gehäuse (58) mit einem Einlaß (57) für Eingabe von formbeständigen Schaumstoffteilchen (A') und einer Gemischausgabe (59),

(b) eine Förderschnecke (64), welche im Gehäuse schräg unterhalb des Einlasses (57) und mit ihrem unteren Ende nach der Ausgabe (59) hinweisend angeordnet ist, und zur Beförderung von Schaumstoffteilchen vom Einlaß (57) zur Ausgabe (59) dient, und

(c) eine auf ihrer Außenwandung die Schneckenwindungen (68) tragende, hohle Schneckenwelle (70), die im Gehäuse (58) drehbar gelagert ist,

(d) eine im Inneren der Schneckenwelle (70) von der Drehung der letzteren unabhängig drehbar gelagerte hohle Antriebswelle (72), die an ihrem unteren, über die Schneckenwindungen (68) hinaus aus der Schneckenwelle (70) herausragenden Ende (72a);

(e) einen mit der Antriebswelle (72) gemeinsam rotierenden Mischkopf (66) trägt,

(f) ein im Inneren der Antriebswelle (72) untergebrachtes, im Gehäuse (58) feststehend gelagertes, mit dem Inneren des Mischkopfes (62) frei verbundenes Führungsrohr (62) für die Zufuhr von ungehärtetem Harnstoff-Formaldehydharzschaum zum Mischkopf (66), und

(g) vom Mischkopf (66) getragene Mischorgane zum Vermischen von dem Mischkopf (66) über das Führungsrohr (62) zugeführtem ungehärteten Schaum (A) mit mittels der Schneckenwindungen (68.) an aen Mischkopf (66) herangebrachten Schaumstoffteilchen.

16. Anlage nach Anspruch 15, dadurch gekennzeichnet, daß der Mischkopf (66) ein das untere Ende des Führungsrohrs (62) in sich lose aufnehmendes, mit der Antriebswelle (72) zwecks Drehung mit ihr fest verbundenes Mischkopfgehäuse (86) mit einem Innenhohlraum (94), in welchen das Führungsrohr (62) öffnet, umfaßt, und

daß auf der Seitenwandung (86a) des Kopfgehäuses (86) eine Anzahl von einander getrennter Schaumausgabeflügel (90) vorgesehen sind, von denen jeder mit Schaumausgabeöffnungen (96 ) längs einer seiner Seitenkanten (90a) vorgesehen ist, aie über einen Kanal (98) mit dem Innenhohlraum (94) in Verbindung stehen.

17. Anlage nach Anspruch 16, dadurch gekennzeichnet, daß die Schaumausgabeöffnungen (96) mit Bürsten (106) oder dergleichen Organen zum Freihalten dieser Öffnungen (96) während des Mischvorganges vorgesehen sind.

18. Anlage nach Anspruch 17, dadurch gekennzeichnet, daß die Bürste (106) jedes Schaumausgabeflügels (90) mit einem Abstreifglied (107) vorgesehen ist.

19. Anlage nach Anspruch 18, dadurch gekennzeichnet, daß das feststehende Zufuhrrohr (62) im Inneren des Mischkopfgehäuses (86) eine Nockeneinrichtung trägt, mittels welcher die Bürsten bzw. die Abstreifglieder gegenüber einander radial in Bezug auf die Längsachse des Antriebsrohrs (72) im Inneren des Schaumausgabeflügels (90) hin und her verschoben werden.

20. Anlage nach einem der Ansprüche 9 bis 19, dadurch gekennzeichnet, daß als Formgebungs- und Härtungseinrichtung ein von Balken, Sparren oder dergleichen eingefaßter Hohlraum in einer Gebäudewand dient, der über einen durch die Außen- oder Innenbekleidung der Gebäudewand durchgebrochen Zugang mit der Umgebungsluft in freier Verbindung steht.

Fig. 1

0034566

Fig.2

Fig. 3

Fig. 4

Fig. 5

**Fig:6**

**Fig:7**

*Fig. 8*

*Fig. 9*

0034566

Europäisches Patentamt

**EUROPÄISCHER RECHERCHENBERICHT**

Nummer der Anmeldung

EP 81 81 0028

| | EINSCHLÄGIGE DOKUMENTE | | KLASSIFIKATION DER ANMELDUNG (Int Cl ) |
|---|---|---|---|
| Kategorie | Kennzeichnung des Dokuments mit Angabe, soweit erforderlich, der maßgeblichen Teile | betrifft Anspruch | |
| A | US - A - 3 651 182 (ROSENTHAL) <br> * Spalte 10, Zeilen 40-49; Spalte 11, Zeilen 5-10; Spalte 20, Zeilen 1-18 * <br> -- | 1 | B 29 D 27/02 <br> C 08 J 9/00 <br> C 08 L 61/00 |
| A | FR - A - 1 565 579 (BPB INDUSTRIES) <br> * Seite 1, linke Spalte, Zeilen 27-37 * <br> -- | 1 | |
| A | US - A - 3 336 184 (BASF) <br> * Anspruch 1 * <br> -- | 1 | **RECHERCHIERTE SACHGEBIETE (Int Cl )** |
| A | FR - A - 2 012 382 (ELECTROLUX) <br> * Anspruch 1 * <br> -- | 1 | B 29 D 27/00 <br> C 08 J 9/00 <br> C 08 L |
| A | FR - E - 88 683 (BASF) <br> * Seite 2, linke Spalte, Zeile 49 - rechte Spalte, Zeile 12 * <br> -- | 1 | |
| AD | DE - B - 1 266 484 (BASF) <br> * Spalte 3, Zeile 66 - Spalte 4, Zeile 36 * <br> ---- | 1 | **KATEGORIE DER GENANNTEN DOKUMENTE** <br> X: von besonderer Bedeutung <br> A: technologischer Hintergrund <br> O: nichtschriftliche Offenbarung <br> P: Zwischenliteratur <br> T der Erfindung zugrunde liegende Theorien oder Grundsätze <br> E: kollidierende Anmeldung <br> D: in der Anmeldung angeführtes Dokument <br> L: aus andern Gründen angeführtes Dokument |
| X | Der vorliegende Recherchenbericht wurde für alle Patentansprüche erstellt. | | &: Mitglied der gleichen Patentfamilie, übereinstimmendes Dokument |

| Recherchenort | Abschlußdatum der Recherche | Prüfer |
|---|---|---|
| Den Haag | 12-05-1981 | KUSARDY |

EPA form 1503.1   06.78